# EUROPÄISCHE PATENTSCHRIFT

(11) **EP 0 805 781 B1**
(45) Veröffentlichungstag und Bekanntmachung des Hinweises auf die Patenterteilung: **08.09.1999**
(21) Anmeldenummer: 96901766.4
(22) Anmeldetag: 26.01.1996
(51) Int. Cl.: C01B 33/16, C04B 14/06, C04B 30/00

(54) **VERFAHREN ZUR HERSTELLUNG VON MODIFIZIERTEN AEROGELEN**
PROCESS FOR THE PRODUCTION OF MODIFIED AEROGELS
PROCEDE DE PRODUCTION D'AEROGELS MODIFIES

(30) Priorität: 27.01.1995 DE 19502453
(43) Veröffentlichungstag der Anmeldung: 12.11.1997
(73) Patentinhaber: CABOT CORPORATION, Boston, MA 02109 (US)
(72) Erfinder: SCHWERTFEGER, Fritz, D-60529 Frankfurt am Main (DE); ZIMMERMANN, Andreas, D-64347 Griesheim (DE)
(74) Vertreter: Luderschmidt, Schüler & Partner GbR
(86) Internationale Anmeldenummer: EP9600308
(87) Internationale Veröffentlichungsnummer: WO9622942

(56) Entgegenhaltungen:
- EP-A- 0 690 023
- GB-A- 682 574
- ANGEWANDTE CHEMIE INTERNATIONAL EDITION., Bd. 8, 1969, WEINHEIM DE, Seiten 974-975, XP000574251 DONIKE M. & JAENICKE L.: "Vinyloxytrimethylsilanes as silylating agents"
- REVUE DE PHYSIQUE APPLIQUEE, COLLOQUE C4, SUPPLEMENT AU NUMERO 4, April 1989, PARIS FR, Seiten 215-220, XP000564311 PAUTHE M. & PHALIPPOU J.: "Silica aerogels prepared by hypercritical acetone evacuation"

## Beschreibung

Die Erfindung betrifft ein Verfahren zur Herstellung von modifizierten Aerogelen.

Aerogele, insbesondere solche mit Porositäten über 60% und Dichten unter 0,6 g/cm³, weisen eine äußerst geringe thermische Leitfähigkeit auf und finden deshalb Anwendung als Warmeisolationsmaterial wie z.B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engerem Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel als Xerogel. Es ist anzumerken, daß es sich bei den erfindungsgemäßen Gelen um Aerogele, im Sinne von Gele mit Luft als Dispersionsmittel handelt. Da diese Gele durch unterkritische Trocknung hergestellt werden, könnten sie aber auch als Xerogele bezeichnet werden.

SiO₂-Aerogele können beispielsweise durch saure Hydrolyse von Tetraethylorthosilikat in Ethanol hergestellt werden. Bei der Hydrolyse entsteht ein Gel, dessen Struktur unter anderem durch die Temperatur, den pH-Wert und die Dauer des Gelierprozesses bestimmt ist. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d. h. es tritt auch kein Schrumpfen des Gels während der Trocknung auf. Auf dieser Trocknungstechnik basierende Herstellungsverfahren sind z. B. aus der EP-A-0 396 076 oder der WO 92/03378 bekannt. Diese Technik erfordert aber, beispielsweise bei der Verwendung von Ethanol, eine Temperatur von etwa 240°C und Drücke von über 60 bar. Der Austausch von Ethanol gegen C0₂ vor der Trocknung erniedrigt zwar die Trocknungstemperatur auf ca. 30°C, der benötigte Druck liegt dann aber bei über 70 bar.

Eine Alternative zu obiger Trocknung bietet ein Verfahren zur unterkritischen Trocknung von SiO₂-Gelen, wenn diese vor der Trocknung mit einem chlorhaltigen Silylierungsmittel umgesetzt werden. Das SiO₂-Gel kann dabei beispielsweise durch saure Hydrolyse von Tetraalkoxysilanen, bevorzugt Tetraethoxysilan (TEOS), in einem geeigneten organischen Lösungsmittel, bevorzugt Ethanol, mittels Wasser erhalten werden. Nach Austausch des Lösungsmittels gegen ein geeignetes organisches Lösungsmittel wird in einem weiteren Schritt das erhaltene Gel mit einem chlorhaltigen Silylierungsmittel umgesetzt. Als Silylierungsmittel werden dabei aufgrund ihrer Reaktivität bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend aus einem organischen Lösungsmittel heraus an der Luft getrocknet werden. Damit können Aerogele mit Dichten unter 0,4 g/cm³ und Porositäten über 60% erreicht werden.
Das auf dieser Trocknungstechnik basierende Herstellverfahren ist ausführlich in der WO 94/25149 beschrieben.

Die oben beschriebenen Gele können darüber hinaus vor der Trocknung in der alkohol-wässrigen Lösung mit Tetraalkoxysilanen versetzt und gealtert werden, um die Gelnetzwerkstärke zu erhöhen, wie in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar. Darüber hinaus fallen bei der Silylierung mittels chlorhaltiger Silylierungsmittel zwangsläufig in sehr großen Mengen Hydrogenchlorid (HCl) sowie eine Vielzahl damit verbundener Nebenprodukte an, die gegebenenfalls eine sehr aufwendige und kostenintensive Reinigung der silylierten SiO₂-Gele durch mehrmaliges Waschen mit einem geeigneten organischen Lösungsmittel erfordern. Die damit verbundenen besonders korrosionsbeständigen Produktionsanlagen sind ebenfalls sehr teuer. Das mit der Entstehung sehr großer Mengen an HCl-Gas verbundene Sicherheitsrisiko bedarf noch zusätzlich einer sehr aufwendigen Technik und ist damit ebenfalls sehr kostenintensiv.

Eine erste nicht unerhebliche Kostensenkung kann durch die Verwendung von Wasserglas als Ausgangsmaterial für die Herstellung der SiO₂-Gele erreicht werden. Dazu kann beispielsweise aus einer wäßrigen Wasserglaslösung mit Hilfe eines Ionenaustauscherharzes eine Kieselsäure hergestellt werden, die durch Zugabe einer Base zu einem SiO₂-Gel polykondensiert. Nach Austausch des wäßrigen Mediums gegen ein geeignetes organisches Lösungsmittel wird dann in einem weiteren Schritt das erhaltene Gel mit einem chlorhaltigen Silylierungsmittel umgesetzt. Als Silylierungsmittel werden dabei aufgrund ihrer Reaktivität ebenfalls bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren ist aus der DE-A-43 42 548 bekannt.

Die weiter oben beschriebenen, mit der Verwendung von chlorhaltigen Silylierungsmitteln verbundenen Probleme der außerordentlich hohen Verfahrenskosten sind jedoch durch die Verwendung von Wasserglas als Ausgangsmaterial nicht gelöst.

Es ist bekannt, Vinyloxymethylsilane als Silylierungsmittel u.a. für Alkohol oder Amine zu verwenden (Angewandte Chemie, Bd. 8, 1969, Seiten 947 ff.).

Aus der GB-A-682 574 ist ein Verfahren zur Herstellung von Kieselsäure-Xerogelen bekannt, bei dem als Syntheseschritt die Silylierung eines silikatischen Lyogels mit einem Alkylalkoxysilan vorgesehen ist.

Aufgabe der vorliegenden Erfindung ist es daher, ein Verfahren zur Herstellung von modifizierten SiO₂-Aerogelen bereitzustellen, das nicht die Nachteile aufweist, die sich aus dem Stand der Technik ergeben, wie zum Beispiel die Bildung von Abspaltungsprodukten oder gar Umsetzungsprodukten davon, die sowohl sicherheitstechnische als auch verfahrenstechnische Probleme aufweisen und damit verbunden auch hohe Verfahrenskosten verursachen.

Diese Aufgabe wird gelöst durch ein Verfahren zur Herstellung von Aerogelen, bei dem man
a) ein silikatisches Lyogel vorlegt,
b) gegebenenfalls das in Schritt a) hergestellte Lyogel einem Lösungsmitteltausch zu einem anderen organischen Lösungsmittel unterwirft,
c) das in Schritt a) oder b) erhaltene Gel mit mindestens einem Silylierungsmittel umsetzt, und
d) das in Schritt c) erhaltene silylierte Gel unterkritisch trocknet, das dadurch gekennzeichnet ist, daß man das in Schritt a) oder b) erhaltene Gel in Schritt c) mit mindestens einem chlorfreien Silylierungsmittel der Formel I umsetzt, 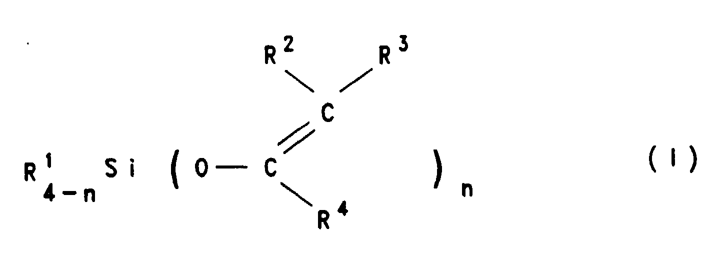 wobei
   - R¹: gleich oder verschieden, ein linearer oder verzweigter C₁-C₆-Alkyl-Rest, ein Cyclohexyl-Rest oder Phenyl-Rest ist,
   - R², R³ und R⁴: gleich oder verschieden, Wasserstoff-Atome, lineare oder verzweigte C₁-C₆-Alkyl-Reste, Cyclohexyl-Reste oder Phenyl-Reste sind, und n = 1, 2 oder 3 ist.

In einer bevorzugten Ausführungsform wird in Schritt a) ein silikatisches Lyogel vorgelegt, das durch Hydrolyse und Kondensation von Si-Alkoxiden in einem organischen Lösungsmittel mit Wasser erhältlich ist (i). Als Si-Alkoxid wird ein Tetraalkoxysilan, vorzugsweise Tetraethoxy- oder Tetramethoxysilan verwendet. Das organische Lösungsmittel ist dabei vorzugsweise ein Alkohol, besonders bevorzugt Ethanol oder Methanol, dem bis zu 20 Vol.-% Wasser zugesetzt sein können.
Bei der Hydrolyse und Kondensation der Si-Alkoxide in einem organischen Lösungsmittel mit Wasser können in einem ein- oder zweistufigen Schritt als Katalysatoren Säuren und/oder Basen zugesetzt werden.
In einer besonders bevorzugten Ausführungsform wird in Schritt a) ein silikatisches Lyogel vorgelegt, das dadurch hergestellt wird, daß man eine wäßrige Wasserglaslösung mit Hilfe eines sauren Ionenaustauscherharzes oder einer Mineralsäure auf einen pH-Wert ≤ 3 bringt, die dabei entstandene Kieselsäure durch Zugabe einer Base zu einem SiO₂-Gel polykondensiert und, falls eine Mineralsäure benutzt wurde, das Gel mit Wasser im wesentlichen elektrolytfrei wäscht (ii). Dabei wird im allgemeinen Natrium- und/oder Kaliumwasserglas verwendet. Als Ionenaustauscherharz wird vorzugsweise ein saures Harz verwendet, wobei vor allem solche geeignet sind, die Sulfonsäuregruppen enthalten. Falls man Mineralsäuren einsetzt, sind vor allem Salzsäure und Schwefelsäure geeignet. Als Base wird im allgemeinen NH₄OH, NaOH, KOH, Al(OH)₃ und/oder kolloidale Kieselsäure eingesetzt. Falls eine Mineralsäure verwendet wurde, wird das mit Hilfe der Base erzeugte SiO₂-Gel mit Wasser im wesentlichen elektrolytfrei gewaschen. Vorzugsweise wird dabei solange gewaschen, bis das ablaufende Waschwasser dieselbe elektrische Leitfähigkeit aufweist wie entmineralisiertes Wasser. Vor dem Waschen läßt man das Gel vorzugsweise altern, und zwar im allgemeinen bei 20 bis 100°C, vorzugsweise bei 40 bis 100°C und besonders bevorzugt bei 80 bis 100°C, und einem pH-Wert von 4 bis 11, vorzugsweise 5 bis 9. Die Zeit dafür beträgt im allgemeinen 1 Sekunde bis 48 Stunder., vorzugsweise 1 Sekunde bis 3 Stunden.

Das in (i) oder (ii) erhaltene Lyogel wäscht man solange mit einem organischen Lösungsmittel, bis der Wassergehalt des Gels kleiner als 5 Gew.-%, vorzugsweise kleiner als 2 Gew.-% und besonders bevorzugt kleiner als 1 Gew.-%, ist. Als Lösungsmittel werden im allgemeinen aliphatische Alkohole, Ether, Ester oder Ketone, oder aliphatische oder aromatische Kohlenwasserstoffe verwendet. Bevorzugte Lösungsmittel sind Methanol, Ethanol, Aceton, Tetrahydrofuran, Essigsäureethylester, Dioxan, n-Hexan und Toluol. Besonders bevorzugt ist Aceton als Lösungsmittel. Man kann aber auch Gemische aus den genannten Lösungsmitteln verwenden. Ferner kann auch zuerst das Wasser mit einem wassermischbaren Alkohol ausgewaschen und dann dieser mit einem Kohlenwasserstoff ausgewaschen werden.

Der Schritt a) wird im allgemeinen bei einer Temperatur zwischen dem Gefrierpunkt der Lösung und 70°C durchgeführt.

Das in Schritt a) hergestellte Lyogel kann ferner aus oben beschriebenen silikatischen Ausgangsverbindungen hergestellt sein, die zusätzlich noch zur Kondensation befähigte Zirkonium-, Aluminium- und/oder Titan-Verbindungen enthalten.

Als organisches Lösungsmittel werden in Schritt b) im allgemeinen aliphatische Alkohole, Ether, Ester oder Ketone sowie aliphatische oder aromatische Kohlenwasserstoffe verwendet. Man kann auch Gemische aus den genannten Lösungsmitteln verwenden. Bevorzugte Lösungsmittel sind Methanol, Ethanol, Propanol, Aceton, Tetrahydrofuran, Essigsäureethylester, Dioxan, n-Hexan, n-Heptan und Toluol. Besonders bevorzugt wird Aceton als Lösungsmittel in Schritt b) verwendet.

In Schritt c) wird das lösungsmittelhaltige Gel mit mindestens einem chlorfreien Silylierungsmittel der Formel (I) umgesetzt, 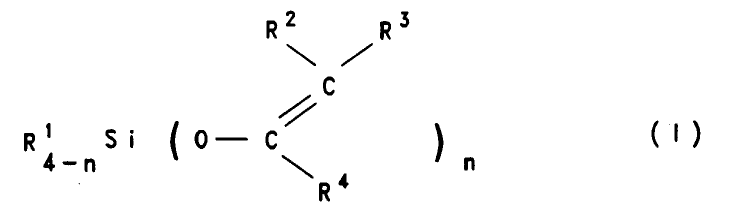 wobei
- R¹: gleich oder verschieden, ein linearer oder verzweigter C₁-C₆-Alkyl-Rest, ein Cyclohexyl-Rest oder Phenyl-Rest ist,
- R², R³ und R⁴: gleich oder verschieden, Wasserstoff-Atome, lineare oder verzweigte C₁-C₆-Alkyl-Reste, Cyclohexyl-Reste oder Phenyl-Reste sind, und n = 1, 2 oder 3 ist.

Vorzugsweise ist R¹ eine Methyl- oder Ethylgruppe, R², R³ und R⁴, gleich oder verschieden, jeweils ein Wasserstoffatom oder eine Methylgruppe, und n = 1 oder 2.

Besonders bevorzugt ist Trimethylisopropenoxysilan (R¹ = CH₃, R² = R³ = H, R⁴ = CH₃ und n = 1).

Trimethylisopropenoxysilan ist dabei, wie die meisten anderen erfindungsgemäßen Silylierungsmittel, entweder im Handel erhältlich, oder kann nach Literatur bekannten Verfahren hergestellt werden. Eine diesbezügliche Offenbarung findet sich z.B. in der DE-A-12 48 049.

Die Umsetzung wird vorzugsweise bei -20 bis 100°C in einem organischen Lösungsmittel durchgeführt, wobei man im besonderen diejenigen Lösungsmittel verwendet, die auch beim Waschen in Schritt a) und Lösungsmitteltausch in Schritt b) eingesetzt werden. Besonders bevorzugt ist Aceton.

In einer bevorzugten Ausführungsform wird das System vor oder während der Silylierung mit geringen Mengen mindestens einer Säure versetzt, um die Silylierungsreaktion zu beschleunigen. Dazu werden vorzugsweise anorganische Mineralsäuren oder Essigsäure verwendet.

Darüberhinaus ist es auch möglich, daß zur Beschleunigung der Silylierungsreaktion auch andere Silylierungsmittel zugesetzt werden. Dazu geeignet sind Silane der Formel R¹₄₋ₙSiClₙ mit n = 1 bis 3, wobei R¹ und R² unabhängig voneinander C₁-C₆-Alkyl, Cyclohexyl oder Phenyl sind. Vorzugsweise verwendet man Trimethylchlorsilan.

Die Mengen liegen im allgemeinen zwischen 0 und 1 Gew.-% (bezogen auf das Lyogel), bevorzugt sind Konzentrationen zwischen 0 und 0,5 Gew.-%, besonders bevorzugt zwischen 0 und 0,2 Gew.-%.

Bei der Umsetzung des Gels mit den erfindungsgemäßen, chlorfreien Silylierungsmitteln der Formel I werden in α-Stellung ungesättigte Alkohole gebildet, die sich sofort in die entsprechenden Ketone bzw. Aldehyde umwandeln (Keto-Enol-Tautomerie]. Bei der Verwendung von Trimethylisopropenoxysilan ensteht auf diese Weise Aceton als einziges Abspaltungsprodukt, das mit dem besonders bevorzugten Lösungsmittel identisch ist.

Dadurch, daß das Abspaltungsprodukt mit dem eingesetzten Lösungsmittel identisch ist, beispielsweise im Falle von Aceton, können sämtliche mit der Silylierung verbundenen Reinigungsschritte im Rahmen der Lösungsmittel- und Produktaufarbeitung entfallen. Unter Umständen kann es trotzdem vorteilhaft sein, das silylierte Gel vor dem Trocknen mit einem protischen oder aprotischen Lösungsmittel zu waschen, wobei man im besonderen diejenigen Lösungsmittel verwendet, die auch beim Waschen in Schritt a) und Lösungsmitteltausch in Schritt b) eingesetzt werden.

Ein weiterer Vorteil des erfindungsgemäßen Verfahrens ist der, daß bei der Silylierung mit den erfindungsgemäßen, chlorfreien Silylierungsmitteln kein HCl-Gas entsteht, und deshalb auch keine korrosiven, chlorhaltigen Nebenprodukte.

In Schritt d) wird das silylierte Gel unterkritisch getrocknet, vorzugsweise bei Temperaturen von -30 bis 200°C, besonders bevorzugt 0 bis 100°C, sowie Drücken von 0,001 bis 20 bar, besonders bevorzugt 0,01 bis 5 bar, insbesondere 0,1 bis 2 bar, beispielsweise durch Strahlungs-, Konvektions-, und/oder Kontakttrocknung. Die Trocknung wird im allgemeinen so lange fortgeführt, bis das Gel einen Lösungsmittel-Restgehalt von weniger als 0,1 Gew.-% aufweist. Die bei der Trocknung erhaltenen Aerogele sind dauerhaft hydrophob.

In einer weiteren Ausführungsform kann das Gel nach der formgebenden Polykondensation in Schritt a) und/oder jedem nachfolgenden Verfahrensschritt nach den dem Fachmann bekannten Techniken, wie z.B. Mahlen, zerkleinert werden.

Des weiteren können dem Sol vor der Gelherstellung zur Reduktion des Strahlungsbeitrags zur Wärmeleitfähigkeit IR-Trübungsmittel,wie z.B. Ruß, Titandioxid, Eisenoxide und/oder Zirkondioxid zugesetzt werden.

In einer weiteren Ausführungsform kann das Gel je nach Anwendung vor der Silylierung noch einer Netzwerkverstärkung unterworfen werden. Dies kann z.B. dadurch geschehen, daß man das erhaltene Gel mit einer Lösung eines zur Kondensation befähigten Alkyl- und/oder Arylorthosilikates der Formel R¹₄₋ₙSi(OR²)ₙ, wobei n = 2 bis 4 ist und R¹ und R² unabhängig voneinander lineare oder verzweigte C₁-C₆-Alkyl-Reste, Cyclohexyl-Reste oder Phenyl-Reste sind, oder mit einer wäßrigen Kieselsäure-Lösung umsetzt.

Für viele Anwendungen von Aerogelen, bei denen vor der Oberflächenmodifikation weitere Komponenten zugesetzt werden, ist es besonders vorteilhaft, auf eine stark saure Silylierung, wie im Fall von Chlorsilanen, verzichten zu können, ohne die Funktion der Oberflächenmodifizierung einzubüßen.

Das erfindungsgemäße Verfahren wird im folgenden anhand von Ausführungsbeispielen näher beschrieben.

### Beispiel 1

1 l einer Natriumwasserglaslösung (mit einem Gehalt von 7 Gew.-% SiO₂ und einem Na₂O:SiO₂ Verhältnis von 1:3,3) wurde zusammen mit 0,5 l eines sauren Ionenaustauscherharzes (Styroldivinylbenzolcopolymer mit Sulfonsäuregruppen, handelsüblich unter dem Namen ®Duolite C20) gerührt, bis der pH-Wert der wäßrigen Lösung 2,7 war. Anschließend wurde das Ionenaustauscherharz abfiltriert und die wäßrige Lösung mit 1 molarer NaOH-Lösung auf einen pH-Wert von 4,7 eingestellt. Danach wurde das entstandene Gel noch 3 Stunden bei 85°C gealtert und anschließend das Wasser mit 3 l Aceton extrahiert. Anschließend wurde das acetonhaltige Gel mit Trimethylisopropenoxysilan silyliert (50 mg Trimethylisopropenoxysilan pro Gramm nasses Gel). Die Trocknung des Gels erfolgte an Luft (3 Stunden bei 40°C, dann 2 Stunden bei 50°C und 12 Stunden bei 150°C).

Das so erhaltene, transparente Aerogel hatte eine Dichte von 0,15 g/cm³. Die spezifische Oberfläche nach BET lag bei 780 m²/g. Der λ-Wert lag bei O,018 W/mK.

Die Wärmeleitfähigkeit wurde mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

### Beispiel 2

1 l einer Natriumwasserglaslösung (mit einem Gehalt von 7 Gew.-% SiO₂ und einem Na₂O:SiO₂ Verhältnis von 1:3,3) wurde zusammen mit 0,5 l eines sauren Ionenaustauscherharzes (Styroldivinylbenzolcopolymer mit Sulfonsäuregruppen, handelsüblich unter dem Namen ®Duolite C20) gerührt, bis der pH-Wert der wäßrigen Lösung 2,7 war. Anschließend wurde das Ionenaustauscherharz abfiltriert und die wäßrige Lösung mit 1 molarer NaOH-Lösung auf einen pH-Wert von 4,7 eingestellt. Danach wurde das entstandene Gel noch 3 Stunden bei 85°C gealtert und anschließend ein Lösungsmitteltausch gegen Aceton mit 3 Liter Aceton durchgeführt. Anschließend wurde das acetonhaltige Gel mit Trimethylisopropenoxysilan silyliert (50 mg Trimethylisopropenoxysilan pro Gramm nasses Gel). Die Trocknung des Gels erfolgte an Luft (3 Stunden bei 40°C, dann 2 Stunden bei 50°C und 12 Stunden bei 150°C).

Das so erhaltene, transparente Aerogel hatte eine Dichte von 0,145 g/cm³. Die spezifische Oberfläche nach BET lag bei 690 m²/g. Der λ-Wert lag bei 0,017 W/mK.

Die Wärmeleitfähigkeit wurde mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

### Beispiel 3

1 l einer Natriumwasserglaslösung (mit einem Gehalt von 7 Gew.-% SiO₂ und einem Na₂O:SiO₂ Verhältnis von 1:3,3) wurde zusammen mit 0,5 l eines sauren Ionenaustauscherharzes (Styroldivinylbenzolcopolymer mit Sulfonsäuregruppen, handelsüblich unter dem Namen ®Duolite C20) gerührt, bis der pH-Wert der wäßrigen Lösung 2,7 war. Anschließend wurde das Ionenaustauscherharz abfiltriert und die wäßrige Lösung mit 1 molarer NaOH-Lösung auf einen pH-Wert von 4,7 eingestellt. Danach wurde das entstandene Gel noch 3 Stunden bei 85°C gealtert und anschließend ein Lösungsmitteltausch gegen i-Propanol mit 3 Liter i-Propanol durchgeführt. Anschließend wurde das propanolhaltige Gel mit 5 Gew.-% Trimethylisopropenoxysilan und 0,1 Gew.-% Trimethylchlorsilan silyliert (Angaben bezogen auf das nasse Gel). Die Trocknung des Gels erfolgte an Luft (3 Stunden bei 40°C, dann 2 Stunden bei 50°C und 12 Stunden bei 150°C).

Das so erhaltene, transparente Aerogel hatte eine Dichte von 0,13 g/cm³. Die spezifische Oberfläche nach BET lag bei 563 m²/g. Der λ-Wert lag bei 0,015 W/mK.

Die Wärmeleitfähigkeit wurde mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

## Patentansprüche

1. Verfahren zur Herstellung von Aerogelen, bei dem man
a) ein silikatisches Lyogal vorlegt,
b) gegebenenfalls das in Schritt a) hergestellte Lyogel einem Lösungsmitteltausch zu einem anderen organischen Lösungsmittel unterwirft,
c) das in Schritt a) oder b) erhaltene Gel mit mindestens einem Silylierungsmittel umsetzt, und
d) das in Schritt c) erhaltene silylierte Gel unterkritisch trocknet, dadurch gekennzeichnet, daß man das in Schritt a) oder b) erhaltene Gel in Schritt c) mit mindestens einem chlorfreien Silylierungemittel der Formel I umsetzt, 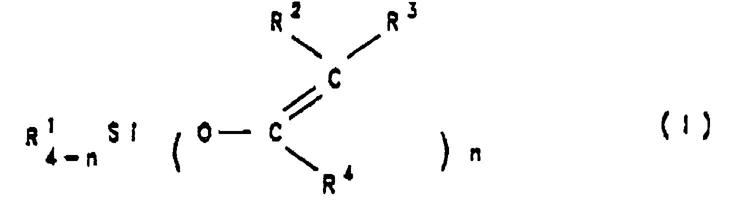 wobei
R¹ gleich oder verschieden, ein linearer oder verzweigter C₁-C₆-Alkyl-Rest, ein Cyclohexyl-Rest oder Phenyl-Rest ist,
R², R³ und R⁴ gleich oder verschieden, Wasserstoff-Atome, lineare oder verzweigte C₁-C₆-Alkyl-Reste, Cyclohexyl-Reste oder Phenyl-Reste sind, und n = 1, 2 oder 3 ist,

2. Verfahren gemäß Anspruch 1, dadurch gekennzeichnet, daß man ein silikatisches Lyogel vorlegt, das durch Hydrolyse und Kondensation von Si-Alkoxiden in einem organischen Lösungsmittel mit Wasser erhältlich ist, und anschließend das erhaltene Gel mit einem organischen Lösungsmittel solange wäscht, bis der Wassergehalt des Gels ≤ 5 Gew.-% ist.

3. Verfahren gemäß Anspruch 1, dadurch gekennzeichnet, daß man ein silikatisches Lyogel vorlegt, das dadurch hergestellt wird, daß man eine wäßrige Wasserglaslösung mit Hilfe eines sauren Ionenaustauscherharzes oder einer Mineralsäure auf einen pH-Wert ≤ 3 bringt, die dabei entstandene Kieselsäure durch Zugabe einer Base zu einem SiO₂-Gel polykondensiert und falls eine Minenalsäure benutzt wurde, das Gel mit Wasser elektrolytfrei wäscht, und anschließend das erhaltene Gel mit einem organischen Lösungsmittel solange wäscht, bis der Wassergehalt des Gels ≤ 5 Gew.-% ist.

4. Verfahren gemäß Anspruch 3, dadurch gekennzeichnet, daß man als Base NH₄OH, NaOH, KOH, Al(OH)₃ und/oder kolloidale Kieselsäure einsetzt.

5. Verfahren gemäß mindestens einem der Ansprüche 1 bis 4, dadurch gekennzeichnet, daß man das in Schritt a) erhaltene SiO₂-Gel bevor man es wäscht bei 20 bis 100°C und einem pH-Wert von 4 bis 11 für eine Dauer von 1 Sekunde bis 48 Stunden altern läßt.

6. Verfahren gemäß mindestens einem der Ansprüche 1 bis 5, dadurch gekennzeichnet, daß man in Schritt b) als organisches Lösungsmittel Methanol, Ethanol, Propanol, Aceton, Tetrahydrofuran, Essigsäureethylester, Dioxan, n-Hexan und/oder Toluol einsetzt.

7. Verfahren gemäß mindestens einem der Ansprüche 1 bis 6, dadurch gekennzeichnet, daß man das in Schritt a) oder b) erhaltene Gel vor der Silylierung mit eIner Lösung eines zur Kondensation befähigten Alkyl- und/oder Arylorthosilikates der Formel R¹₄₋ₙSi(OR²)ₙ, wobei n = 2 bis 4 ist und R¹ und R² unabhängig voneinander lineare oder verzweigte C₁-C₆-Alkyl-Reste, Cyclohexyl-Reste oder Phenyl-Reste sind, oder mit einer wäßrigen Kieselsäure-Lösung umsetzt.

8. Verfahren gemäß mindestens einem der Ansprüche 1 bis 7, dadurch gekennzeichnet, daß man in Schritt c) das lösungsmittelhaltige Gel mit mindestens einem chlorfreien Silylierungsmittel der Formel (I) umsetzt, wobei R¹ eine Methyl- oder Ethylgruppe,
R²` R³ und R⁴, gleich oder verschieden, jeweils ein Wasserstoffatom oder eine Methylgruppe und n = 1 oder 2 ist.

9. Verfahren gemäß Anspruch 8, dadurch gekennzeichnet, daß man in Schritt c) das lösungsmittelhaltige Gel mit Trimethylisopropenoxysilan umsetzt.

10. Verfahren gemäß mindestens einem der Ansprüche 1 bis 9, dadurch gekennzeichnet, daß man die Umsetzung in Schritt c) in einem organischen Lösungsmittel bei einer Temperatur Im Bereich von -20 bis 100°C durchführt.

11. Verfahren gemäß mindestens einem der Ansprüche 1 bis 10, dadurch gekennzeichnet, daß man das in Schritt c) erhaltene silylierte Gel mit einem protischen oder aprotischen Lösungsmittel wäscht, bevor man es in Schritt d) trocknet.

12. Verfahren gemäß einem der Ansprüche 1 bis 11, dadurch gekennzeichnet, daß man in Schritt d) das silylierte Gel bei -30 bis 200°C und 0,001 bis 20 bar trocknet.

## Claims

1. A method of producing aerogels in which
a) a silicated lyogel is provided
b) possibly the lyogel produced in step a) is subjected to a solvent exchange with another organic solvent,
c) the gel obtained in step a) or b) is reacted with at least one silylating agent, and
d) the silylated gel obtained in step c) is dried under subcritical conditions, characterised in that the gel obtained in step a) or b) is, in step c), reacted with at least one chlorine-free silylating agent to formula I 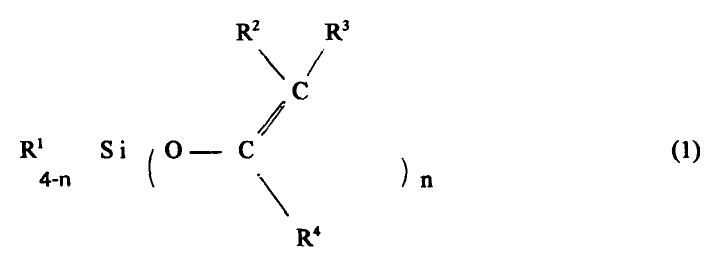 in which
R¹ is, the same or different, a linear or branched C₁-C₆-alkyl radical, a cyclohexyl radical or a phenyl radical,
R², R³ and R⁴ are, the same or different, hydrogen atoms, linear or branched C₁-C₆-alkyl radicals, cyclohexyl radicals or phenyl radicals, and n = 1, 2 or 3.

2. A method according to claim 1, characterised in that a silicated lyogel is provided which is obtainable by hydrolysis and condensation of Si-alkoxides in an organic solvent with water after which the gel obtained is washed with an organic solvent until such time as the water content of the gel is ≤ 5% by weight.

3. A method according to claim 1, characterised in that a silicated lyogel is provided which is produced in that a aqueous water glass solution, is by means of an acid ion exchanger resin or a mineral salt, brought to a pH value ≤ 3, the resulting silicic acid is, by the addition of a base, polycondensed to produce a SiO₂ gel and, if a mineral acid was used, the gel is washed electrolyte-free with water, after which the gel obtained is washed with a organic solvent until the water content of the gel is ≤ 5% by weight.

4. A method according to claim 3, characterised in that the base used is NH₄O-alkyl NH₄OH, NaOH, KOH, Al(OH)₃ and/or colloidal silicic acid.

5. A method according to at least one of claims 1 to 4, characterised in that before it is washed, the SiO₂ gel obtained in step a) is allowed to age for a period from 1 second to 48 hours at 20 to 100°C and a pH value of 4 to 11.

6. A method according to at least one of claims 1 to 5, characterised in that, in step b), the organic solvent used is methanol, ethanol, propanol, acetone, tetrahydrofuorane, acetic acid ethyl ester, dioxane, n-hexane and/or toluene.

7. A method according to at least one of claims 1 to 6, characterised in that the gel obtained in step a) or b) is, prior to silylation, reacted with a solution of an alkyl and/or aryl orthosilicate capable of condensation to formula R¹₄₋ₙSi(OR²)ₙ, in which n = 2 to 4 and R¹ and R², independently of each other, are linear or branched C₁-Cₐ-alkyl radicals, cyclohexyl radicals or phenyl radicals, or is reacted with an aqueous silicic acid solution.

8. A method according to at least one of claims 1 to 7, characterised in that in step c) the solvent-containing gel is reacted with at least one chlorine-free silylating agent to formula (1), in which R¹ is a methyl or ethyl group, R², R³ and R⁴, the same or different, is in each case a hydrogen atom or a methyl group and n = 1 or 2.

9. A method according to claim 8, characterised in that the solvent-containing gel is reacted with trimethyl isopropene oxysilane in step c).

10. A method according to at least one of claims 1 to 9, characterised in that the reaction in step c) is carried out in an organic solvent at a temperature in the range from -20 to 100°C.

11. A method according to at least one of claims 1 to 10, characterised in that the silylated gel obtained in step c) is washed with a protic or aprotic solvent before it is dried in step d).

12. A method according to one of claims 1 to 11, characterised in that the silylated gel in step d) is dried at -30 to +200°C and 0.001 to 20 bars.

## Revendications

1. Procédé de production d'aérogels, dans lequel :
a) on se procure un lyogel au silicate ;
b) facultativement, on soumet le lyogel produit à l'étape a) à un échange de solvants contre un autre solvant organique ;
c) on fait réagir le gel obtenu à l'étape a) ou b) avec au moins un agent de silylation ; et
d) on effectue une dessiccation sous-critique du gel silylé obtenu à l'étape c), caractérisé en ce que, à l'étape c), on fait réagir le gel obtenu à l'étape a) ou b) avec au moins un agent de silylation exempt de chlore de formule I 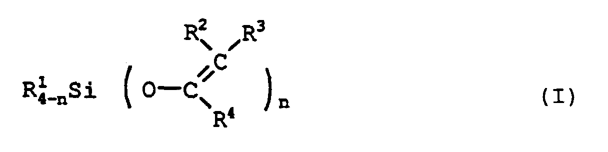 dans laquelle :
les R¹, identiques ou différents, représentent un résidu alkyle en C₁ à C₆ linéaire ou ramifié, un résidu cyclohexyle ou un résidu phényle ;
les R², R³ et R⁴, identiques ou différents, représentent des atomes d'hydrogène, des résidus alkyle en C₁ à C₆ linéaires ou ramifiés, des résidus cyclohexyle ou des résidus phényle ; et
n = 1, 2 ou 3.

2. Procédé selon la revendication 1, caractérisé en ce que l'on se procure un lyogel au silicate pouvant être obtenu par hydrolyse et condensation d'alcoxydes de Si dans un solvant organique avec de l'eau, et ensuite on lave le gel obtenu avec un solvant organique jusqu'à ce que la teneur en eau du gel soit ≤ 5 % en poids.

3. Procédé selon la revendication 1, caractérisé en ce que l'on se procure un lyogel au silicate qui est préparé en tenant une solution aqueuse de verre soluble à pH ≤ 3 à l'aide d'une résine échangeuse d'ions acide ou d'un acide minéral, en polycondensant l'acide silicique ainsi obtenu en un gel de SiO₂ par ajout d'une base et, dans le cas où un acide minéral a été employé, en lavant le gel avec de l'eau jusqu'à ce qu'il soit exempt d'électrolytes, et ensuite on lave le gel obtenu avec un solvant organique jusqu'à ce que la teneur en eau du gel soit ≤ 5 % en poids.

4. Procédé selon la revendication 3, caractérisé en ce que la base utilisée est NH₄OH, NaOH, KOH, Al(OH)₃ et/ou de l'acide silicique colloïdal.

5. Procédé selon l'une au moins des revendications 1 à 4, caractérisé en ce que, avant de le laver, on laisse vieillir le gel de SiO₂ obtenu à l'étape a) à une température de 20 à 100°C et à un pH de 4 à 11 pendant une durée de 1 seconde à 48 heures.

6. Procédé selon l'une au moins des revendications 1 à 5, caractérisé en ce que le solvant organique utilisé à l'étape b) est le méthanol, l'éthanol, le propanol, l'acétone, le tétrahydrofurane, l'acétate d'éthyle, le dioxane, le n-hexane et/ou le toluène.

7. Procédé selon l'une au moins des revendications 1 à 6, caractérisé en ce que, avant la silylation, on fait réagir le gel obtenu à l'étape a) ou b) avec une solution d'un orthosilicate d'alkyle et/ou d'aryle apte à la condensation, de formule R¹₄₋ₙSi(OR²)ₙ, dans laquelle n = 2 à 4 et R¹ et R² sont indépendamment l'un de l'autre des résidus alkyle en C₁ à C₆ linéaires ou ramifiés, des résidus cyclohexyle ou des résidus phényle, ou bien avec une solution aqueuse d'acide silicique.

8. Procédé selon l'une au moins des revendications 1 à 7, caractérisé en ce que, à l'étape c), on fait réagir le gel contenant du solvant avec au moins un agent de silylation exempt de chlore de formule (I), dans laquelle R¹ est un groupe méthyle ou éthyle, R², R³ et R⁴ sont identiques ou différents et représentent chacun un atome d'hydrogène ou un groupe méthyle, et n = 1 ou 2.

9. Procédé selon la revendication 8, caractérisé en ce que, à l'étape c), on fait réagir le gel contenant du solvant avec du triméthylisopropénoxysilane.

10. Procédé selon l'une au moins des revendications 1 à 9, caractérisé en ce que la réaction à l'étape c) se fait dans un solvant organique à une température dans la plage de -20 à 100°C.

11. Procédé selon l'une au moins des revendications 1 à 10, caractérisé en ce qu'on lave le gel silylé obtenu à l'étape c) avec un solvant protique ou aprotique avant de le sécher à l'étape d).

12. Procédé selon l'une au moins des revendications 1 à 11, caractérisé en ce que, à l'étape d), on sèche le gel silylé à une température de -30 à 200°C et sous une pression de 0,001 à 20 bars.
